# EUROPÄISCHE PATENTSCHRIFT

(11) **EP 1 440 254 B1**
(45) Veröffentlichungstag und Bekanntmachung des Hinweises auf die Patenterteilung: **13.07.2005**
(21) Anmeldenummer: 03737292.7
(22) Anmeldetag: 30.01.2003
(51) Int. Cl.: F16H 1/32

(54) **GETRIEBE MIT SCHMIERNUTEN**
GEARING WITH LUBRICATION GROOVES
ENGRENAGE A RAINURES DE LUBRIFICATION

(30) Priorität: 08.02.2002 DE 10205199
(43) Veröffentlichungstag der Anmeldung: 28.07.2004
(73) Patentinhaber: KUKA Roboter GmbH, 86165 Augsburg (DE)
(72) Erfinder: MARKERT, Joachim, 86163 Augsburg (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: PCT/EP2003/000936
(87) Internationale Veröffentlichungsnummer: WO 2003/067124

(56) Entgegenhaltungen:
- US-A- 5 609 539
- PATENT ABSTRACTS OF JAPAN vol. 008, no. 104 (M-296), 16. Mai 1984 (1984-05-16) & JP 59 017066 A (SUMITOMO JUKIKAI KOGYO KK), 28. Januar 1984 (1984-01-28)

## Beschreibung

Die Erfindung betrifft ein Getriebe mit Innen- und Außenzahnrädern unterschiedlicher Zähnezahl, deren Zahnrad-Achsen radial zueinander versetzt sind, mit wenigstens einem Zahnrad, das eine Verzahnung in Form von kreiszylinderförmigen Stiften aufweist, die in zur Zahnrad-Achse parallelen Taschen angeordnet sind.

Als Innenzahnrad wird ein Zahnrad mit radial nach innen gerichteter Verzahnung - also Innenverzahnung - bezeichnet, das ein Außenzahnrad, also ein Zahnrad mit nach außen gerichteter (Außen-)Verzahnung, umgibt.

Im Bereich der Robotik besteht ein Bedarf an Getrieben mit hoher Überlastsicherheit und hohen Genauigkeitsanforderungen, wie beispielsweise sehr geringem Getriebespiel. Diese Getriebe dienen zur Übertragung von Bewegungen sowie von Leistungen. Die Anforderungen werden im hohen Maße durch Exzenter-Planetengetriebe und speziell durch Zykloidengetriebe erfüllt.

Derartige Getriebe haben ein oder mehrere Außenzahnräder, in der Regel mit einer Wellen- oder Zykloidenverzahnung, die sich in Eingriff mit einer Verzahnung mindestens eines Innenzahnrades befinden, wobei sich die Zähnezahl der Innenverzahnung geringfügig von der Zähnezahl der Außenverzahnung unterscheidet. Die Außenzahnräder werden durch einen oder mehrere Exzenter angetrieben, wodurch eine Differenzialbewegung zwischen dem Außenzahnrad bzw. den Außenzahnrädern und dem Innenzahnrad erreicht wird.

Zur Erleichterung der Produktion des Innenzahnrades und zur gleichzeitigen Verringerung des Reibungswiderstandes zwischen Innen- und Außenzähnen hat sich für die Verzahnung des Innenzahnrades eine Bauform mit zylindrischen Stiften mit kreisförmigem Querschnitt in den Taschen des Innenzahnrades etabliert. Die Stifte sind in der Regel um ihre eigene Achse drehbar gelagert. Die Taschen weisen zu diesem Zweck einen teilkreisförmigen, speziell halbkreisförmigen Querschnitt auf. Auf diese Weise fungieren die Stifte als Zähne des Innenzahnrads.

Ein entsprechendes bekanntes Getriebe der eingangs genannten Art erweist weiterhin eine Achse des Außenzahnrads auf, die gegenüber einer Achse des Innenzahnrades radial versetzt und weiterhin derart gelagert ist, dass sich die Achse des Außenzahnrades auf einer Kreisbahn um die Achse des Innenzahnrades bewegt, so dass zusammen mit der Drehung des Außenzahnrades eine relativ langsame Drehung des Innenzahn-rades bewirkt ist.

Steigende Anforderungen an die Getriebegenauigkeit haben zu immer engeren Toleranzen für die Fertigung der Getriebekomponenten und für die Abstimmung bei der Montage geführt. Beispielsweise werden die Außenzahnräder innerhalb des Innenzahnrades durch zeit- und kostenintensive Auslese der Stifte mit im Mikrometerbereich abgestuften Durchmessern möglichst spielarm in Eingriff gebracht. Dabei bewirkt jedoch die zunehmend engere Einstellung der Getriebe entsprechend ungünstige tribologische Verhältnisse, wodurch der Reibungswiderstand zwischen Innen- und Außenzähnen sowie zwischen Stiften und Taschen zunimmt und den Wirkungsgrad der Getriebe herabsetzt. Darüber hinaus führt die enge Einstellung der Getriebe häufig zu ruckartigen Bewegungen, insbesondere bei niedrigen Drehgeschwindigkeiten oder hohen Anfahrmomenten, wodurch das Fahrverhalten beispielsweise eines Industrieroboters stark negativ beeinflusst wird. Zudem können die auf die Getriebe einwirkenden Antriebe über Gebühr beansprucht und so in Mitleidenschaft gezogen werden.

Zusätzlich zu vorstehend angesprochenen drehbaren Lagerung der Innenzähne ist im Zuge dieser Problematik das Vorsehen einer Schmierung insbesondere an der Berührungsfläche der drehbaren Stifte mit dem Gehäuseteil des Innenzahnrades bekannt. Zu diesem Zweck erweisen die Stifte eine spezielle Oberfläche auf, in die gezielt mikroskopisch kleine lokale Vertiefungen eingebracht wurden. Die Vertiefungen dienen als Schmiertaschen zur Aufnahme eines Schmierstoffes und reduzieren so teilweise den Effekt des Ruckgleitens.

Ein Getriebe mit den Merkmalen des Oberbegriffs des Anspruchs 1 ist bekannt aus US-A-5 609 539.

Es hat sich allerdings herausgestellt, dass diese Art der Schmierung nicht immer ausreichend ist, um einen ruhigen, ruckfreien Lauf des Getriebes zu gewährleisten und die mit dem Getriebe verbundenen Antriebe zu schonen. Weiterhin ist als nachteilig anzusehen, dass die verwendeten Stifte aufgrund der notwendigen anspruchsvollen Oberflächenbehandlung relativ teuer sind.

Der Erfindung liegt daher die Aufgabe zugrunde, ein Getriebe zu schaffen, das unter Vermeidung der vorstehend aufgeführten Nachteile verbesserte Laufeigenschaften aufweist, ohne zu diesem Zweck auf eine kostenintensive spezielle Mikrotopographie der Zähne angewiesen zu sein.

Diese Aufgabe wird bei einem Getriebe der eingangs genannten Art gelöst durch die kennzeichnenden Merkmale des Anspruchs 1.

Dies ist bevorzugt beispielsweise bei achsparallel verlaufenden wellenförmigen Nuten der Fall, dessen Wellenberge und Wellentäler in Umfangsrichtung vor der Haupterstreckungsrichtung der Nuten versetzt verlaufen. Durch die erfindungsgemäße Ausgestaltung lässt sich eine verbesserte Schmierung der rotierbaren Innenzähne auf fertigungstechnisch einfache und damit kostengünstige Weise erreichen.

Die Nuten sind vorzugsweise zumindest in den Taschenwänden der Innenzahnräder ausgebildet, können aber auch alternativ oder zusätzlich in den Taschenwänden der Außenzahnräder ausgebildet sein. Prinzipiell können die Schmiernuten beliebige Formen aufweisen, und dadurch ein Hereinziehen des Schmierstoffes in die Kontaktfläche zwischen Stift und Tasche zu begünstigen. Aus fertigungstechnischen Gründen eignen sich hierfür insbesondere gerade, parallel zu den Zahnradachsen verlaufende Nuten. In einer weiteren bevorzugten Ausgestaltung des erfindungsgemäßen Getriebes können die Nuten auch eine Verlaufskomponente in Umfangsrichtung aufweisen und sind dabei vorzugsweise wellenförmig ausgebildet. Durch eine wellenförmige Ausbildung der Nuten ist ein Verteilen des Schmierstoffes über einen großflächigen Bereich der Taschenoberfläche gewährleistet, was sich äußerst positiv auf die Laufeigenschaften des erfindungsgemäßen Getriebes auswirkt.

Um eine Schmierstoffzufuhr zu den Nuten zu verbessern, ist nach einer weiteren Ausgestaltung des erfindungsgemäßen Getriebes vorgesehen, dass das entsprechende Zahnrad im Bereich der Taschen zusätzlich Umfangsnuten mit einer Erstreckung im wesentlichen in Umfangsrichtung aufweist. Die Umfangsnuten sind dabei vorzugsweise im Bereich einer Stirnseite des Außenzahnrades angeordnet, so dass durch eine Pumpwirkung der Zahnradbewegung Schmierstoff in die Umfangsnuten gefördert wird und von dort in die axialen Nuten gelangt. Hierzu ist nach einer äußerst bevorzugten Ausgestaltung der Erfindung vorgesehen, dass die Umfangsnuten die Nuten mit axialer Erstreckungskomponente unter einem endlichen Winkel schneiden. Die Umfangsnuten können beispielsweise in Form von Teilringnuten ausgebildet sein.

Um eine optimale Schmierstoffförderung aus dem Getrieberaum zu den Taschen zu ermöglichen, weisen die Umgangsnuten in Umfangsrichtung vorzugsweise eine Erstreckung über die gesamte Taschenfläche auf. Darüber hinaus können die Umfangsnuten so ausgebildet sein, dass sie zumindest teilweise über Durchstiche durch zwischen den Taschen vorhandene Stege miteinander verbunden sind, wodurch ein ständiger Schmierstofffluss auch in den Bereichen des Getriebes gewährleistet ist, in denen in einem gegebenen Betriebszustand keine ausreichende Pump- und Zahnradbewegung wirksam ist.

Zur Verbesserung der Standdauer und Zuverlässigkeit des erfindungsgemäßen Getriebes ist weiter vorgesehen, dass die Nuten mit axialer Erstreckungskomponente im Grund der Taschen angeordnet sind, da eine solche Anordnung hinsichtlich der Druckbelastung aus dem Getriebeeingriff besonders günstig ist. Die maximale Druckbelastung der Stifte und der Taschen tritt im Bereich der Wangen, d.h. der seitlichen Taschenbereiche auf, so dass die Flächenpressung in der Schmiegung von Stift und Tasche durch das erfindungsgemäße Fehlen von Material im Bereich der Nut und die dadurch bewirkte Verkleinerung der Kontaktfläche, d.h. die damit einhergehende Erhöhung des Druckes nicht wesentlich vergrößert wird.

In einer weiteren bevorzugten Ausgestaltung des erfindungsgemäßen Getriebes ist vorgesehen, dass bei Verwendung mehrerer einander entsprechender Zahnräder, die paarweise mit jeweils einer Stirnseite miteinander in Anlage stehen, diese an einem Übergang der entsprechenden Stirnseiten zur Verzahnung Abschrägungen aufweisen. In Verbindung mit der Anordnung der Umfangsnuten im Bereich der Stirnseiten der Zahnräder ist so ein sich in Umfangsrichtung erstreckender Kanal gebildet, der den Schmierstofftransport innerhalb des Getriebes zusätzlich fördert und dadurch zur Realisierung optimaler Laufeigenschaften beiträgt.

Gemäß einer bevorzugten Ausführung ist vorgesehen, dass die Nuten einen geringeren Krümmungsradius aufweisen als die Taschen, wobei insbesondere der Krümmungsradius der Nuten weniger als die Hälfte, vorzugsweise weniger als ein Fünftel des Krümmungsradius' der Taschen beträgt. Darüber hinaus zeichnet sich eine bevorzugte Ausführung dadurch aus, dass der Übergang von den Taschen in die Nuten unstetig erfolgt, wobei der Übergang insbesondere über Kanten erfolgt.

Im folgenden werden bevorzugte Ausführungsbeispiele der Erfindung anhand der beigefügten Zeichnung näher erläutert. In der Zeichnung zeigt:
- Fig. 1: eine Schnittdarstellung eines Getriebes nach dem Oberbegriff des Anspruchs 1 zur Darstellung der Gesamtanordnung;
- Fig. 2: eine Draufsicht auf den Zahneingriff eines Außenzahnrades in die Innenverzahnung eines Innenzahnrades bei einem erfindungsgemäßen Getriebes;
- Fig. 3: eine Teilschnittansicht längs der Line G-G der Fig. 2 bei dem erfindungsgemäßen Getriebe mit einem Außenzahnrad;
- Fig. 4a: in einer perspektivischen Ansicht einen Ausschnitt eines Gehäuseteils eines erfindungsgemäßen Innenzahnrads mit rein axialen Nuten;
- Fig. 4b: in einer perspektivischen Ansicht einen Teilausschnitt eines Gehäuseteils des erfindungsgemäßen Innenzahnrades mit wellenförmigen Nuten;
- Fig. 4c: in einer perspektivischen Ansicht einen Teilausschnitt eines Gehäuseteils des erfindungsgemäßen Innenzahnrades mit axialen Nuten und Umfangsnuten;
- Fig. 4d: in einer perspektivischen Ansicht einen Teilausschnitt eines Gehäuseteils des erfindungsgemäßen Innenzahnrades mit axialen Nuten und in Umfangsrichtung miteinander verbundenen Umfangsnuten; und
- Fig. 5: einen Vollschnitt längs der Line G-G der Fig. 2 bei einer weiteren Ausführungsform des erfindungsgemäßen Getriebes.

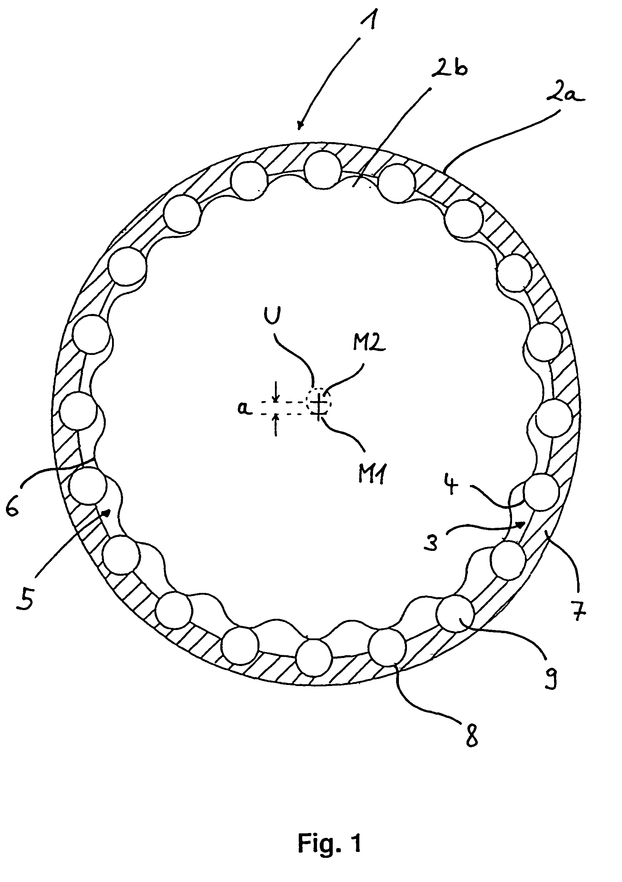

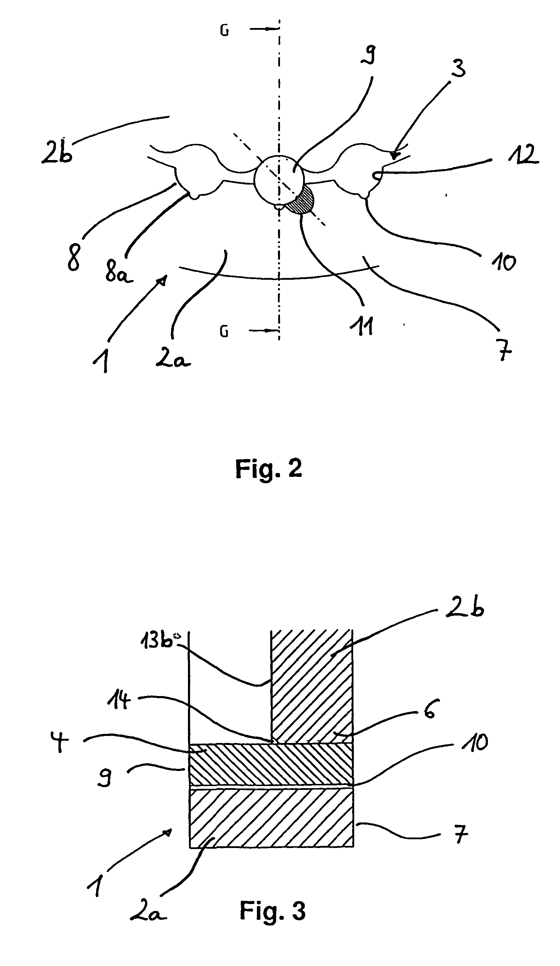

Wie aus Fig. 1 ersichtlich, umfasst ein erfindungsgemäßes Getriebe 1 ein Innenzahnrad 2a (Zahnrad mit Innenverzahnung) und wenigstens ein Außenzahnrad 2b (Zahnrad mit Außenverzahnung). Die beiden Zahnräder 2a,2b weisen jeweils eine Mittelachse M1 bzw. M2 auf, die um ein Maß a voneinander beabstandet sind. Das Innenzahnrad 2a weist in einem inneren Umfangsbereich 3 eine Innenverzahnung 4 auf, die beim gezeigten Ausführungsbeispiel durch um eine senkrecht zur Blattebene verlaufende Längsachse rotierbare Stifte 9 mit kreisförmigem Querschnitt gebildet ist, die in einem Gehäuseteil 7 des Innenzahnrades 1 vorhandene Taschen 8 mit halbkreisförmigem Querschnitt gehalten sind (Fig. 2). Die Stifte 9 sind gleichmäßig über den Innenumfang 3 des Innenzahnrades 2a verteilt angeordnet.

Das Außenzahnrad 2b ist in seinem äußeren Umfangsbereich 5 zykloidenförmig ausgebildet, so dass es eine Anzahl von Außenzähnen 6 in Wellenform aufweist, deren Anzahl im allgemeinen geringer als die Zahl der Innenzähne des Getriebes gewählt ist. Bei dem in Fig. 1 dargestellten Getriebe 1 ist das Außenzahnrad 2b derart durch Kurbelwellen (nicht gezeigt) abgestützt, dass es um die Achse M1 des Innenzahnrades 2a drehbar ist, wobei sich die Achse M2 des Außenzahnrades 2b auf einer kreisförmigen Umlaufbahn U um die Achse M1 des Innenzahnrades 2a bewegt, deren Radius dem Maß a des Achsenabstandes M1-M2 entspricht. Das Innenzahnrad 2a des gezeigten Getriebes 1 wird durch das umlaufende Außenzahnrad 2b gedreht, wobei während der Drehbewegung des Außenzahnrades 2b dessen Außenzähne 6 in gleitender und kämmender Berührung mit der Innenverzahnung 4 des Innenzahnrades 1 stehen. Aufgrund der kombinierten Dreh- und Umlaufbewegung des Außenzahnrades 2b ist eine relativ niedrige Drehzahl des Innenzahnrades 1a bewirkt.

Fig. 2 zeigt den Zahneingriff eines Außenzahnrades 2b des in Fig. 1 dargestellten erfindungsgemäßen Getriebes 1 in die aus rotierbaren Stiften 9 gebildete Außenverzahnung 4 eines erfindungsgemäßen Innenzahnrades 2a, wobei nur ein Stift 9 dargestellt ist. Das Innenzahnrad 2a weist ein Gehäuseteil 7 auf, in das gleichmäßig über einen inneren Umfang 3 verteilt Taschen 8 mit halbkreisförmigem Querschnitt angeordnet sind, die zur Aufnahme der rotierbaren Stifte 9 der Innenverzahnung 4 ausgebildet sind. Im Grund der Taschen 8 sind beim gezeigten Ausführungsbeispiel axial verlaufende Nuten 10 mit ebenfalls halbkreisförmigem Querschnitt vorgesehen, die mit einem geeigneten Schmierstoff (nicht gezeigt) gefüllt sind. Wie aus Fig. 2 ersichtlich ist, sind die Nuten 10 außerhalb eines Bereiches 11 der durch die Momentenabstützung bedingten höchsten Druckeinwirkung auf das Gehäuseteil 7 angeordnet, die im Bereich der Wangen 12 der Taschen 8 auftritt und hier als Druckellipse 11 dargestellt ist. Auf diese Weise behält das Gehäuseteil 7 trotz der Materialwegnahme im Bereich der Nuten 10 seine Widerstandsfähigkeit gegenüber den während eines Laufs des erfindungsgemäßen Getriebes 1 auftretenden Kraft- und Momenteneinwirkungen.

Der in Fig. 3 gezeigte Schnitt längs der Linie G-G der Fig. 2 durch eine Ausführungsform des erfindungsgemäßen Getriebes 1 mit einem zykloidenförmigen Außenzahnrad 2b zeigt die axiale Erstreckung der Nut 10 zwischen dem Gehäuseteil 7 des Innenzahnrades 2a und dem einen Teil der Innenverzahnung 4 bildenden rotierbaren Stift 9. Im Bereich einer Stirnseite 13b des Außenzahnrades 2b ist im Bereich der Außenverzahnung 6 eine Abschrägung 14 vorhanden.

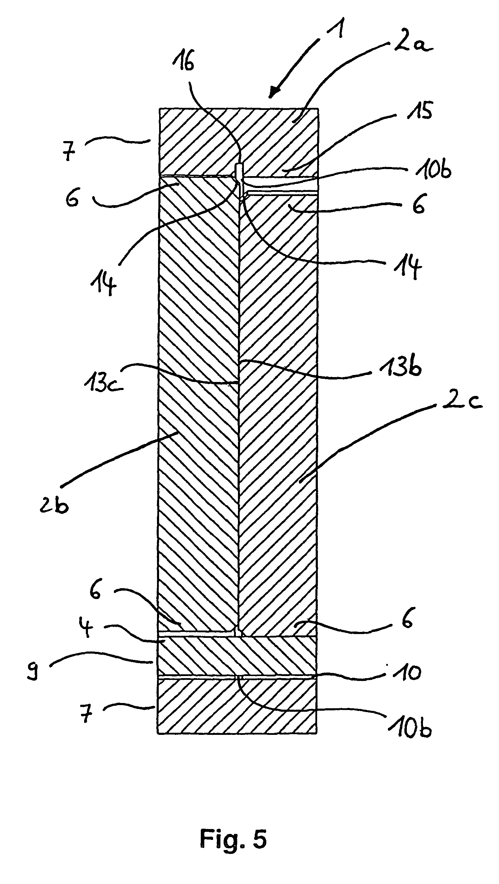

Bei Getrieben 1 mit zwei oder mehr Außenzahnrädern 2b,2c (Fig. 5) bilden derartige Abschrägungen 14 bei axialer Anlage der Zahnräder 2b,2c gegeneinander eine Art Kanal in Umfangsrichtung, der den Schmierstofftransport innerhalb des Getriebes fördert.

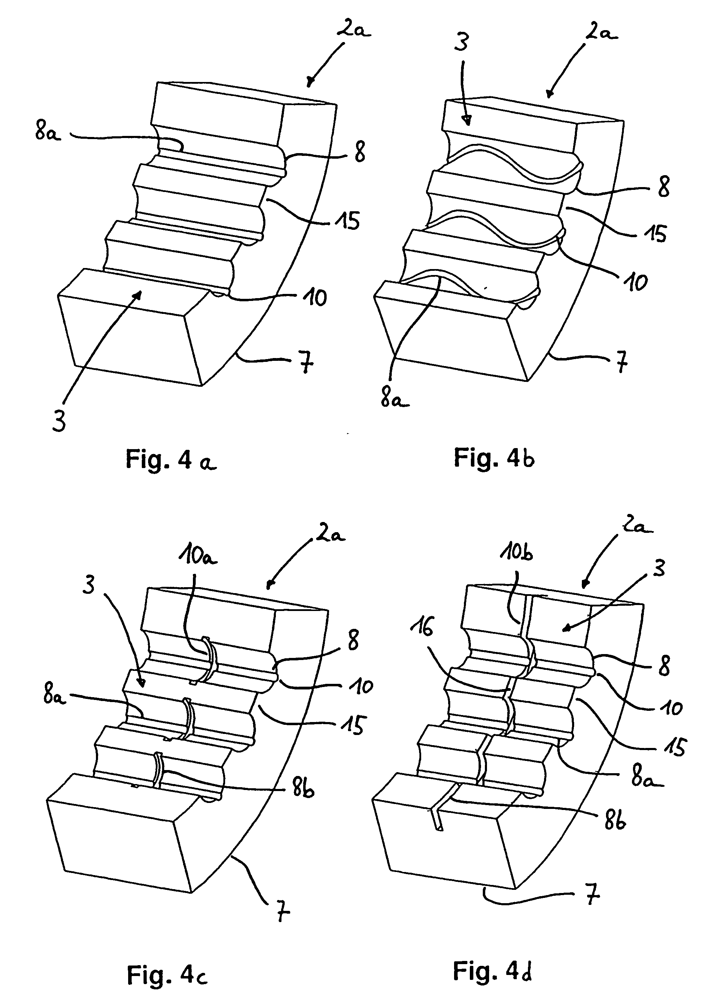

Fig. 4a bis 4d zeigen unterschiedliche Ausgestaltungen von im Bereich des Innenumfangs 3 des Gehäuseteils 7 eines erfindungsgemäßen Innenzahnrades 2a vorgesehenen Nuten 10, 10a,10b. Bei dem in der Fig. 4a gezeigten Ausführungsbeispiel sind im Grund der Taschen 8 des Gehäuseteils 7 gerade Nuten 10 mit rein axialer Erstreckung vorgesehen. Die einzelnen Taschen 8 mit jeweils halbkreisförmigem Querschnitt sind durch axiale Stege 15 voneinander getrennt.

Bei dem in Fig. 4b gezeigten Ausführungsbeispiel weisen die Nuten 10 eine Verlaufskomponente in Umfangsrichtung des Innenzahnrades 2a auf und sind speziell wellenförmig ausgebildet.

Bei dem in Fig. 4c dargestellten Ausführungsbeispiel weist das erfindungsgemäße Innenzahnrad 2a zusätzlich zu den geraden, axialen Nuten 10 der Fig. 4a Umfangsnuten 10a auf, die sich in Umfangsrichtung über die gesamte Fläche der Taschen 8 erstrecken und die axialen Nuten 10 unter einem Winkel von 90° schneiden.

Im Bereich der Stege 15 öffnen die Umfangsnuten 10a zum Getriebeinnenraum, so dass aufgrund einer Pumpwirkung des mindestens einen in Fig. 1 bis 3 dargestellten Außenzahnrades 2b Schmierstoff auf effiziente Weise in die Umfangsnuten 10a und von da aus in die axialen Nuten 10 einbringbar ist.

Das Ausführungsbeispiel der Fig. 4d zeigt ein Gehäuseteil 7 eines erfindungsgemäßen Innenzahnrades 2a mit axialen Nuten 10 und senkrecht dazu angeordneten Umfangsnuten 10b, bei dem die Umfangsnuten 10b im Bereich der Stege 15 über Durchbrüche 16 in Umfangsrichtung miteinander in Verbindung stehen. Dabei weisen die Umfangsnuten 10b eine derartige Tiefe auf, dass Schmierstoff ungehindert aus den Umfangsnuten 10b in die axialen Nuten 10 fließen kann.

Durch ein derartiges Netz von Nuten 10,10b ist in Verbindung mit einer Pumpwirkung des Außenzahnrades 2b des erfindungsgemäßen Getriebes 1 eine optimale und gleichmäßige Schmierstoffverteilung innerhalb des Getriebes 1 und insbesondere an den Berührungsflächen der rotierbaren Stifte 9 mit den Taschen 8 des Gehäuseteils 7 möglich. Der Übergangs- oder Grenzbereich der Taschen 8 zu den Nuten 10 mit geringerem Krümmungsradius ist durch eine Kante 8a,8b gebildet.

Der in Fig. 5 gezeigt Vollschnitt durch ein erfindungsgemäßes Getriebe 1 zeigt zwei Außenzahnräder 2b,2c, die innerhalb eines Innenzahnrades 2a mit Gehäuseteil 7 angeordnet sind, so dass sich ihre Stirnflächen 13b,13c berühren. Die Innenverzahnung 4 des Innenzahnrads 2a ist durch rotierbare Kreiszylinderstifte 9 gebildet, von denen in Fig. 5 nur einer erkennbar ist. Die Stifte 9 sind in aus den Fig. 1 bis 3 bekannten Taschen 8 im Gehäuseteil 7 des Innenzahnrades 2a rotierbar angeordnet. Im Grund der Taschen 8 sind axiale Nuten 10 vorhanden, deren axiale Länge zumindest der gesamten (axialen) Dicke beider Außenzahnräder 2b,2c entspricht und die von in Umfangsrichtung verlaufenden Nuten 10b unter einem Winkel von 90° im Bereich des Taschengrundes geschnitten werden. Die Tiefe der Umfangsnuten 10b entspricht in diesem Bereich im wesentlichen der Tiefe der axialen Nuten 10, während die Umfangsnuten 10b im Bereich der Stege 15 des Gehäuseteils 7 des Innenzahnrades 2a tiefer eingeschnitten sind 16, wie in Fig. 4d gezeigt. Auf diese Weise bilden die Umfangsnuten 10b eine einzige, einfach gekrümmte, durchgängige Nut in Umfangsrichtung.

Die Außenzahnräder 2b,2c weisen im Bereich der Außenverzahnung 6 an Ihren Stirnseiten 13b,13c Abschrägungen 14 auf, durch die oberhalb der Stifte 9 ein zusätzlicher Schmierstoff-Kanal in Umfangsrichtung gebildet ist.

Bei einer derartigen Ausgestaltung ist im Inneren des erfindungsgemäßen Getriebes ein optimaler Schmierstofftransport gewährleistet, wodurch die an sich hervorragenden Laufeigenschaften dieses Getriebetyps noch verbessert werden, ohne sich nachteilig auf die Zuverlässigkeit und Standfestigkeit der Erfindung auszuwirken.

## Patentansprüche

1. Getriebe mit Innen- und Aüßenzahnrädern unterschiedlicher Zähnezahl, deren Zahnrad-Achsen radial zueinander versetzt sind, mit wenigstens einem Zahnrad, das eine Verzahnung in Form von kreiszylinderförmigen Stiften aufweist, die in zur Zahnrad-Achse parallelen Taschen angeordnet sind, wobei zumindest eines der Zahnräder (2a) im Bereich der Taschen (8) mit Schmierstoff gefüllte Nuten (10) aufweist, die sich im wesentlichen achsparalleler Richtung erstrecken, **dadurch gekennzeichnet, dass** die Nuten (10) eine Verlaufskomponente in Umfangsrichtung aufweisen.

2. Getriebe nach Anspruch 1, **dadurch gekennzeichnet, dass** die Nuten (10) wellenförmig ausgebildet sind.

3. Getriebe nach einem der Ansprüche 1 oder 2, **dadurch gekennzeichnet, dass** zumindest ein Zahnrad (2a) im Bereich der Taschen (8) zusätzlich Umfangsnuten (10a,10b) mit einer Erstreckung im wesentlichen in Umfangsrichtung aufweist.

4. Getriebe nach Anspruch 3, **dadurch gekennzeichnet, dass** die Umfangsnuten (10a,10b) die Nuten (10) mit axialer Erstreckungskomponente unter einem endlichen Winkel schneiden.

5. Getriebe nach Anspruch 3 oder 4, **dadurch gekennzeichnet, dass** sich die Umfangsnuten (10a,10b) in Umfangsrichtung vollständig über die Taschenfläche erstrecken.

6. Getriebe nach einem der Ansprüche 3 bis 5, **dadurch gekennzeichnet, dass** die Umfangsnuten (10a,10b) zumindest teilweise über Durchstiche (16) durch zwischen den Taschen (8) vorhandene Stege (15) miteinander verbunden sind.

7. Getriebe nach einem der Ansprüche 1 bis 6, **dadurch gekennzeichnet, dass** die Nuten (10) mit axialer Erstreckungskomponente im Grund der Taschen (8) angeordnet sind.

8. Getriebe nach einem der Ansprüche 3 bis 7, **dadurch gekennzeichnet, dass** die Umfangsnuten (10a,10b) im Bereich mindestens einer Stirnseite (13b,13c) des Zahnrads (2b,2c) angeordnet sind.

9. Getriebe nach einem der Ansprüche 3 bis 8, **dadurch gekennzeichnet, dass** bei Verwendung mehrerer axial nebeneinander angeordneter, einander entsprechender Zahnräder (2b,2c), die paarweise mit jeweils einer Stirnseite (13b,13c) miteinander in Anlage stehen, diese an einem Übergang der entsprechenden Stirnseiten (13b,13c) zu einer Verzahnung (6) Abschrägungen (14) aufweisen, durch die ein sich in Umfangsrichtung erstreckender Kanal gebildet ist.

10. Getriebe nach einem der vorangehenden Ansprüche, **dadurch gekennzeichnet, dass** die Nuten (10) einen geringeren Krümmungsradius aufweisen als die Taschen (8).

11. Getriebe nach einem der vorangehenden Ansprüche, **dadurch gekennzeichnet, dass** der Krümmungsradius der Nuten (10) weniger als die Hälfte vorzugsweise weniger als ein Fünftel des Krümmungsradius' der Taschen (8) beträgt.

12. Vorrichtung nach einem der vorangehenden Ansprüche, **dadurch gekennzeichnet, dass** der Übergang von den Taschen (8) in die Nuten (10,10a,10b) stetig erfolgt.

13. Vorrichtung nach einem der vorangehenden Ansprüche, **dadurch gekennzeichnet, dass** der Übergang von den Taschen (8) zu den Nuten (10,10a,10b) über Kanten (8a,8b) erfolgt.

## Claims

1. Gearing with internal and external gears having different numbers of teeth, whose gear axes are radially mutually offset, with at least one gear having a tooth system in the form of circular cylindrical pins located in pockets parallel to the gear axis, wherein at least one of the gears (2a), in the vicinity of the pockets (8), has grooves (10) filled with lubricant, which extend in a substantially axially parallel direction, **characterized in that** the grooves (10) have a circumferential running component.

2. Gearing according to claim 1, **characterized in that** the grooves (10) are wavy.

3. Gearing according to one of the claims 1 or 2, **characterized in that** at least one gear (2a) is provided in the vicinity of the pockets (8) with additional circumferential grooves (10a, 10b) with a substantially circumferential extension.

4. Gearing according to claim 3, **characterized in that** the circumferential grooves (10a, 10b) intersect the grooves (10) with an axial extension component under a finite angle.

5. Gearing according to claim 3 or 4, **characterized in that** the circumferential grooves (10a, 10b) extend fully over the pocket surface in the circumferential direction.

6. Gearing according to one of the claims 3 to 5, **characterized in that** the circumferential grooves (10a, 10b) are at least partly interconnected by means of cuts (16) through webs (15) present between the pockets (8).

7. Gearing according to one of the claims 1 to 6, **characterized in that** the grooves (10) with the axial extension component are placed in the bottom of the pockets (8).

8. Gearing according to one of the claims 3 to 7, **characterized in that** the circumferential grooves (10a, 10b) are located in the vicinity of at least one front face (13b, 13c) of the gear (2b, 2c).

9. Gearing according to one of the claims 3 to 8, **characterized in that** when using several axially juxtaposed, corresponding gears (2b, 2c), which are in pairwise engagement with in each case one front face (13b, 13c), they are provided at a transition of the corresponding front faces (13b, 13c) to a tooth system (6) with bevels (14) leading to the formation of a circumferentially extending channel.

10. Gearing according to one of the preceding claims, **characterized in that** the grooves (10) have a smaller radius of curvature than the pockets (8).

11. Gearing according to one of the preceding claims, **characterized in that** the radius of curvature of the grooves (10) is less than half and preferably less than 1/5 of the radius of curvature of the pockets (8).

12. Device according to one of the preceding claims, **characterized in that** there is a continuous transition from the pockets (8) into the grooves (10, 10a, 10b).

13. Device according to one of the preceding claims, **characterized in that** the transition from the pockets (8) to the grooves (10, 10a, 10b) takes place over edges (8a, 8b).

## Revendications

1. Engrenage à roues dentées intérieurs et extérieures à nombre variable de dents, dont les axes de roue dentée sont décalés radialement entre eux, comprenant au moins une roue dentée présentant une denture sous la forme d'aiguilles cylindriques circulaires, disposées dans des poches parallèles à l'axe de roue dentée, dans lequel au moins une des roues dentées (2a) présente dans la zone des poches (8) des rainures (10) remplies de lubrifiant, s'étendant dans une direction sensiblement axiale, **caractérisé en ce que** les rainures (10) présentent une composante directionnelle périphérique.

2. Engrenage selon la revendication 1, **caractérisé en ce que** les rainures (10) sont de forme ondulée.

3. Engrenage selon l'une des revendications 1 ou 2, **caractérisé en ce qu'**au moins une roue dentée (2a) présente dans la zone des poches (8) des rainures périphériques supplémentaires (10a, 10b) s'étendant sensiblement en direction périphérique.

4. Engrenage selon la revendication 3, **caractérisé en ce que** les rainures périphériques (10a, 10b) coupent les rainures (10) à composante directionnelle axiale selon un angle fini.

5. Engrenage selon la revendication 3 ou 4, **caractérisé en ce que** les rainures périphériques (10a, 10b) s'étendent en direction périphérique entièrement sur la surface des poches.

6. Engrenage selon l'une quelconque des revendications 3 à 5, **caractérisé en ce que** les rainures périphériques (10a, 10b) sont reliées entre elles au moins partiellement par des percages (16) à travers des entretoises (15) présentes entre les poches (8).

7. Engrenage selon l'une quelconque des revendications 1 à 6, **caractérisé en ce que** les rainures (10) à composante directionnelle axiale sont disposées au fond des poches (8).

8. Engrenage selon l'une quelconque des revendications 3 à 7, **caractérisé en ce que** les rainures périphériques (10a, 10b) sont disposées dans la zone d'au moins une face frontale (13b, 13c) de la roue dentée (2b, 2c).

9. Engrenage selon l'une quelconque des revendications 3 à 8, **caractérisé en ce que** lors de l'utilisation de plusieurs roues dentées (2b, 2c) disposées axialement côte à côte et en correspondance, en contact entre elles par paires à chaque fois par une face frontale (13b, 13c), celles-ci présentent des chanfreins (14) au passage des faces frontales correspondantes (13b, 13c) vers une denture (6), qui forment un canal s'étendant en direction périphérique.

10. Engrenage selon l'une quelconque des revendications précédentes, **caractérisé en ce que** les rainures (10) présentent un rayon de courbure inférieur à celui des poches (8).

11. Engrenage selon l'une quelconque des revendications précédentes, **caractérisé en ce que** le rayon de courbure des rainures (10) est inférieur à la moitié, de préférence inférieur au cinquième du rayon de courbure des poches (8).

12. Dispositif selon l'une quelconque des revendications précédentes, **caractérisé en ce que** le passage des poches (8) vers les rainures (10, 10a, 10b) s'effectue de façon continue.

13. Dispositif selon l'une quelconque des revendications précédentes, **caractérisé en ce que** le passage des poches (8) vers les rainures (10, 10a, 10b) s'effectue par des arêtes (8a, 8b).
